# FASCICULE DE BREVET EUROPEEN

(11) **EP 0 410 874 B1**
(45) Date de publication et mention de la délivrance du brevet: **25.08.1993**
(21) Numéro de dépôt: 90402131.8
(22) Date de dépôt: 25.07.1990
(51) Int. Cl.: B60J 5/10

(54) **Dispositif d'équilibrage d'un hayon**
Ausgleichseinrichtung für eine Heckklappe
Tailgate blancer

(30) Priorité: 27.07.1989 FR 8910126
(43) Date de publication de la demande: 30.01.1991
(73) Titulaire: REGIE NATIONALE DES USINES RENAULT, 92109 Boulogne-Billancourt (FR)
(72) Inventeur: Rove, Yves, F-92500 Nanterre (FR); Simon, Michel, F-78500 Sartrouville (FR)
(74) Mandataire: Srour, Elie

(56) Documents cités:
- EP-A- 0 196 968
- DE-A- 2 940 898
- DE-U- 1 893 407

## Description

La présente invention se rapporte à un dispositif d'équilibrage d'un hayon de véhicule automobile conforme au préambule de la revendication.

La publication EP-A-0196 968 décrit un dispositif dans lequel les ressorts pneumatiques d'équilibrage sont reliés aux côtés du hayon et se logent dans des gouttières de la caisse. Ils exercent sur le hayon un couple antagoniste du couple créé par le poids et facilitent de ce fait les manoeuvres du hayon.

Pour certaines configurations où le bras de levier dû au hayon est important, les dispositifs connus ne permettent pas d'exercer un couple suffisant sur le hayon.

La présente invention a pour but de fournir un dispositif d'équilibrage du type divulgué par EP-A-0196968 permettant d'exercer un couple important sur le hayon.

Selon l'invention le but est atteint par la mise en oeuvre des caractéristiques énoncées dans la partie caractérisante de la revendication 1.

Selon un mode de réalisation de l'invention, le hayon a une forme en L, dont une branche est articulée à la caisse du véhicule.

L'invention va maintenant être décrite avec plus de détails en se référant à un mode de réalisation donné à titre d'exemple et représenté par les dessins annexés sur lesquels:
- la figure 1 est une coupe verticale longitudinale d'un hayon en position ouverte équipé du dispositif d'équilibrage selon l'invention;
- la figure 2 est une coupe du hayon en position fermée;

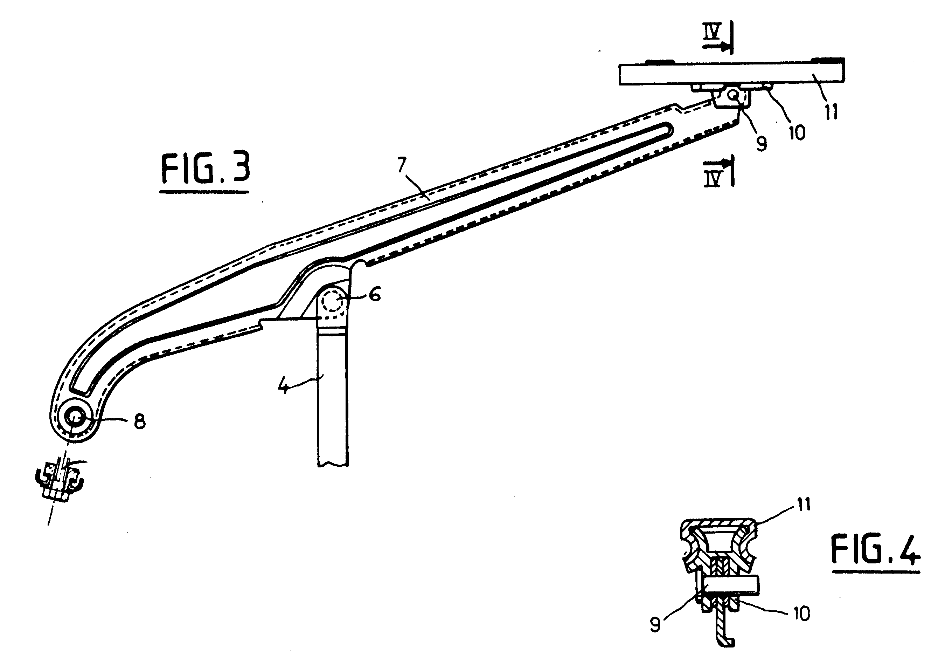

- La figure 3 est une vue de détail du dispositif,
- La figure 4 est une coupe selon la ligne 4-4 de la figure 3.

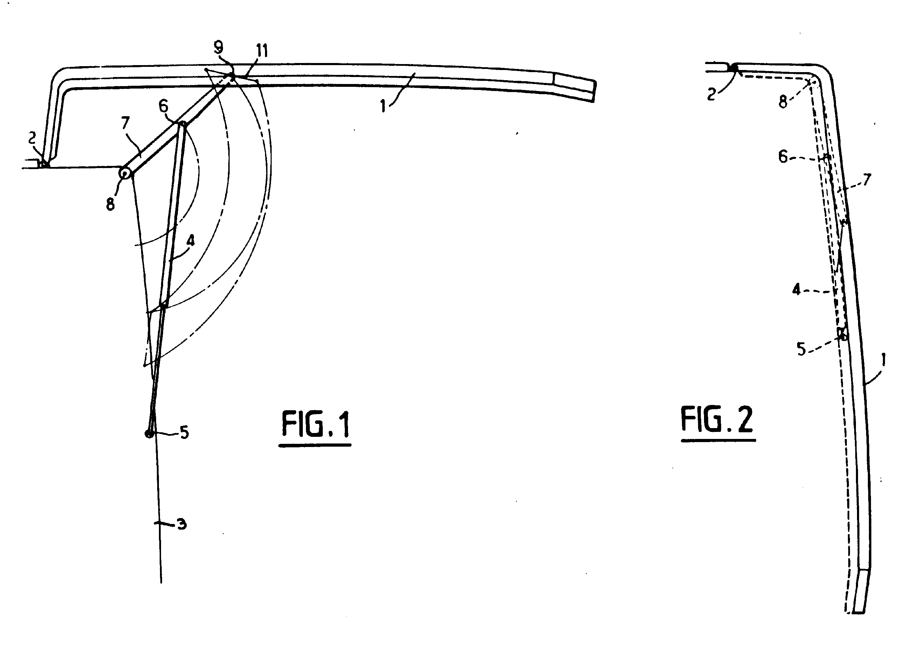

la figure 1 représente un hayon arrière 1 de véhicule articulé autour d'un axe 2 à la caisse 3 du véhicule.

Le dispositif d'équilibrage comporte sur au moins un côté un organe d'équilibrage 4 du type ressort ou vérin pneumatique. Ce ressort est articulé par son extrémité basse à la caisse 3 autour d'un axe d'articulation 5. Il est articulé par son extrémité haute à un levier d'équilibrage 7, autour d'un axe d'articulation 6 du type rotule. Ce levier d'équilibrage est relié par une de ses extrémités à la caisse 3 par l'intermédiaire d'une articulation 8 et par son autre extrémité à un coulisseau 10 par l'intermédiaire d'une articulation 9.

En se référant à la figure 2, la rotule 6 se situe sensiblement au milieu du levier 7.

Le coulisseau 10 est guidé en translation dans une glissière 11 fixée au hayon. Ce coulisseau 10 présente des portées de guidage glissant contre des portées de guidage conjuguées de la glissière 11, empêchant tout déboîtement du coulisseau par rapport à la glissière.

Le hayon a une forme en L dont la petite branche est articulé en 2 à la caisse. L'axe 2 est situé vers l'avant par rapport à l'axe 8.

La glissière a pour rôle de compenser la différence de rayon de l'extrémité levier par rapport à l'axe d'articulation 2, entre la position fermée et la position ouverte.

La butée haute du hayon est réalisée par le ressort pneumatique. Dans cette position le ressort est totalement détendu. Le levier 7 joue le rôle de faux hayon.

Le fontionnement du dispositif va maintenant être décrit.

En position hayon ouvert, le hayon developpe un couple résistant presque maximal. L'effort minimal du ressort 4 est calculé de façon, en tenant compte des rapports des différents bras de levier, à maintenir le hayon 1 en position ouverte avec une garantie de maintien en position.

En transfert l'effort augmente, le couple moteur évolue en parallèle du couple résistant du hayon par une multiplication des bras de levier.

En position fermée, l'effort dans le ressort 4 est maximal. Cependant le levier 7 se met pratiquement dans l'axe du ressort pneumatique. Il en résulte un couple moteur quasiment nul.

L'ajout d'un levier 7 en mouvement de translation rectiligne dans la glissière permet une démultiplication du couple moteur notamment en position hayon fermé.

L'axe d'articulation 8 du levier étant indépendant de l'axe d'articulation 2 du hayon 1, le levier 7 s'implante pratiquement dans l'axe du ressort pneumatique 4.

Le levier d'équilibrage 7 et le ressort 4 possèdent un axe longitudinal pratiquement commun et occupent alors un volume minimum. Dès lors, ce volume est suffisamment réduit pour être implanté dans la gouttière d'étanchéité entre caisse et hayon.

Les côtés d'entrée de porte ne sont pas affectées par l'ajout de ce dispositif. Cette considération est importante pour un véhicule du type utilitaire. De plus ce montage offre une relative sécurité lors d'un chargement, au sens où le mécanisme, situé hors de la ligne d'étanchéité, ne peut être percuté par la charge. Cette même sécurité existe lors de la fermeture du hayon.

## Revendications

1. Dispositif d'équilibrage d'un hayon (1) articulé autour d'un axe horizontal (2) à la partie supérieure d'une caisse (3) de véhicule dans lequel un ressort pneumatique d'équilibrage (4) est articulé en partie basse à la caisse (3) et en partie haute à un levier d'équilibrage (7) accouplé au hayon (1), le ressort (4) exerçant sur le hayon (1) une poussée vers le haut de manière à compenser l'action du poids du hayon, qui tend à ramener celui-ci vers le bas dans sa position de fermeture. caractérisé par le fait que le levier d'équilibrage (7) possède une extrémité montée à articulation (8) sur la caisse du véhicule et une autre extrémité munie d'un coulisseau (9) guidé par une glissière (10) fixée au hayon (1) tandisque le ressort d'équilibrage (4) possède son extrémité haute articulée (6) entre lesdits coulisseau (9) et articulation (8) sur la caisse dudit levier d'équilibrage (7).

2. Dispositif selon la revendication 1, caractérisé par le fait que le hayon a une section en L, dont une branche est articulée à la caisse du véhicule.

## Patentansprüche

1. Vorrichtung zum Gewichtsausgleich einer Heckklappe (1), die im oberen Bereich eines Kraftfahrzeugaufbaus (3) um eine waagrechte Achse (2) angelenkt ist, wobei eine pneumatische Ausgleichsfeder (4) mit ihrem unteren Abschnitt an dem Aufbau (3) und mit ihrem oberen Abschnitt an einem mit der Heckklappe (1) verbundenen Ausgleichshebel (7) angelenkt ist, so daß die Feder (4) die Heckklappe (1) nach oben derart mit Kraft beaufschlagt, daß die Wirkung des Gewichts der Heckklappe kompensiert wird, durch welches diese nach unten in Schließstellung gedrückt wird, dadurch gekennzeichnet, daß der Ausgleichshebel (7) ein Ende aufweist, das über ein Gelenk (8) mit dem Kraftfahrzeugaufbau verbunden ist und ein anderes Ende aufweist, das mit einem Schieber (9) versehen ist, der durch eine Schiene (10) geführt wird, die an der Heckklappe (1) befestigt ist, während die Ausgleichsfeder (4) mit ihrem oberen Ende (6) zwischen dem Schieber (9) und dem an dem Aufbau befestigten Gelenk (8) des Ausgleichshebels (7) angelenkt ist.

2. Vorrichtung nach Anspruch 1, dadurch gekennzeichnet, daß die Heckklappe einen L-förmigen Querschnitt aufweist, dessen einer Arm am Fahrzeugaufbau angelenkt ist.

## Claims

1. A device for balancing a rear door (1) which is pivoted about a horizontal axis (2) to the upper part of a vehicle body (3), in which a pneumatic balancing spring (4) is pivoted in the lower part to the body (3) and in the upper part to a balancing lever (7) coupled to the rear door (1), the spring (4) applying an upward thrust to the rear door (1) so as to compensate for the action of the weight of the rear door, which tends to return it downwardly into its closure position, characterised in that the balancing lever (7) has one end mounted pivotably (8) to the body of the vehicle and another end provided with a slide member (9) guided by a sliding guide (10) fixed to the rear door (1) while the balancing spring (4) has its upper end pivoted (6) between said slide member (9) and said pivot mounting (8) to the body of said balancing lever (7).

2. A device according to claim 1 characterised in that the rear door is of a L-shaped section of which one limb is pivotally mounted to the body of the vehicle.
